# EUROPÄISCHE PATENTSCHRIFT

(11) **EP 1 520 170 B1**
(45) Veröffentlichungstag und Bekanntmachung des Hinweises auf die Patenterteilung: **29.02.2012**
(21) Anmeldenummer: 03740114.8
(22) Anmeldetag: 03.07.2003
(51) Int. Cl.: G01S 7/52

(54) **VERFAHREN UND VORRICHTUNG ZUR PRÜFUNG EINES HOHLKÖRPERS**
METHOD AND DEVICE FOR TESTING A HOLLOW BODY
PROCEDE ET DISPOSITIF POUR TESTER UN CORPS CREUX

(30) Priorität: 05.07.2002 DE 10230547
(43) Veröffentlichungstag der Anmeldung: 06.04.2005
(73) Patentinhaber: AVL Tippelmann GmbH, 74196 Neuenstadt (DE)
(72) Erfinder: TIPPELMANN, Götz, 74169 Neuenstadt (DE)
(74) Vertreter: Staudt, Hans-Peter
(86) Internationale Anmeldenummer: PCT/DE2003/002215
(87) Internationale Veröffentlichungsnummer: WO 2004/005914

(56) Entgegenhaltungen:
- GB-A- 1 302 028
- US-A- 4 416 145
- US-A- 5 636 179
- US-A- 5 970 434

## Beschreibung

Die Erfindung betrifft ein Verfahren und eine Vorrichtung zur Prüfung eines Hohlkörpers hinsichtlich geometrisch richtiger Ausführung von Hohlräumen.

Die Überprüfung von Hohlräumen in Hohlkörpern hinsichtlich geometrisch richtiger Ausführung der Hohlräume stellt in vielen technischen Bereichen eine schwierige Aufgabe dar. Insbesondere dann, wenn diese Hohlräume komplizierte Formen aufweisen und die Hohlkörper nicht zerlegt werden können, um die Abmessungen der Hohlräume daraufhin zu überprüfen, ob sie in ihren Abmessungen dem gewünschten Stand, beispielsweise den in einer Konstruktionszeichnung vorgegebenen Abmessungen entsprechen, erfordert eine derartige Überprüfung einen erheblichen Energie- und Zeitaufwand, ist zudem hinsichtlich ihrer Resultate unsicher und mitunter überhaupt nicht möglich.

Ein typisches Beispiel für einen derartigen Hohlkörper mit komplizierten Hohlräumen ist ein Zylinderkopf für eine wassergekühlte Brennkraftmaschine. Derartige Zylinderköpfe werden üblicherweise als Gussteile hergestellt und enthalten Hohlräume mit komplizierten Formen, insbesondere Kühlwasserräume, die aufgrund ihrer Form, Lage und Zuordnung zueinander, beispielsweise durch Verzweigungen, nicht zuverlässig kontrollierbar sind. Fehler, die sich beim Gießen derartiger Gussteile bilden können, können als Ursache Vererzungen der Kerne, Kernbrüche oder Sandreste haben.

Versuche, derartige Hohlräume durch Durchblasen der Hohlkörper mit Druckluft, mittels Durchgangsprüfungen unter Verwendung von biegsamen Stahlnadeln oder durch endoskopische Untersuchungen zu prüfen, weisen keine zuverlässigen Resultate auf und sind energie- und zeitaufwendig.

Die US 5,636,179 A offenbart ein Verfahren zur Behandlung eines Objekts, nämlich eines Fluids, beispielsweise einer Emulsion oder ähnlichem, mit dem Ziel, durch Beschallung eine Mischung oder Entmischung herbeizuführen, wobei zusätzlich eine Auswahl von Frequenzbereichen erfolgt, die für das ganze Ziel besonders effektiv sind.

Der Erfindung liegt die Aufgabe zugrunde, ein Verfahren und eine Vorrichtung bereitzustellen, mittels dem bzw. der Hohlkörper hinsichtlich geometrisch richtiger Ausführung von Hohlräumen unter Vermeidung der Nachteile des Standes der Technik untersucht werden können.

Die Lösung dieser Aufgabe ist in den Patentansprüchen angegeben.

Der Erfindung liegt das physikalische Prinzip zugrunde, dass jeder Hohlraum unter akustischem Gesichtspunkt einen Filter darstellt, dessen Filtereigenschaften durch seine Geometrie bestimmt sind. Als klassisches Beispiel sei der Helmholtz-Resonator genannt. Die Filtercharakteristik lässt sich messtechnisch dadurch bestimmen, dass der Hohlraum durch akustische Signale erregt wird und das Antwortsignal registriert und analysiert wird. Bei der Analyse ist gegebenenfalls auch das Erregersignal zu berücksichtigen. Es wird somit mittels einer Schallquelle an einer vorbestimmten Schallanlege-Position, d.h. in einer bestimmten Lagezuordnung zu dem Hohlkörper, ein Ausgangs-Schallsignal (Anregung) erzeugt. An einer oder mehreren vorbestimmten Schallabstrahl-Positionen, d.h. an Messpositionen, die an bestimmten Stellen in Bezug auf den Hohlkörper gewählt werden, wird das von dem Hohlkörper abgestrahlte, d.h. das gefilterte oder modifizierte Schallsignal (Antwort) aufgenommen. Das aufgenommene Schallsignal wird schließlich analysiert, wobei sich aus der Analyse Rückschlüsse auf die korrekte Ausführung der Geometrie der Hohlräume ergeben.

Als Schallanlege-Position wird vorzugsweise eine Stelle gewählt, an der ein Zugang zu dem Hohlraum des Hohlkörpers besteht, d.h. eine Stelle in der Nähe einer Öffnung des Hohlkörpers. Entsprechend wird als Schallabstrahl-Position vorzugsweise ebenfalls eine Stelle in der Nähe einer vorzugsweise anderen Öffnung des Hohlkörpers gewählt. Ein von dem Hohlkörper abgestrahltes Schallsignal kann somit insbesondere ein solches Schallsignal sein, dass aus einer Öffnung des Hohlkörpers abgestrahlt wird, d. h. ein Schallsignal, dass aus dem Schallkörper austritt.

Es ist zudem empfehlenswert, sowohl bei der Einspeisung des Ausgangs-Schallsignals als auch bei der Aufnahme des abgestrahlten Schallsignals eine Schallisolation vorzusehen, die dafür sorgt, dass nur oder zumindest überwiegend das Ausgangs-Schallsignal der Schallquelle in den Hohlraum eingeleitet und nur oder zumindest überwiegend das von dem Hohlraum abgestrahlte, d.h. das gefilterte oder modifizierte Schallsignal von einem Schallaufnehmer, beispielsweise einem Mikrofon, aufgenommen wird.

Das Prüfverfahren kann kontinuierlich oder diskontinuierlich durchgeführt werden. Bei komplizierten, verzweigten Hohlräumen, wie sie zum Beispiel Wasserräume von Zylinderköpfen für Brennkraftmaschinen darstellen, erhält man Amplituden- und Phasenfrequenzgänge mit einer Vielzahl von Resonanzen, die sich den geometrischen Gegebenheiten zuordnen lassen.

Aus den Analysedaten (Amplituden- und Phasenfrequenzgänge, Übertragungsfunktionen etc.) lassen sich Rückschlüsse auf die Geometrie der Hohlräume ziehen. So kann zum Beispiel das Vorhandensein und die Intensität einzelner Resonanzen einen Hinweis auf die richtige Ausführung bestimmter Details des Hohlraums geben. Während grundsätzlich eine Berechnung des infolge einer bestimmten geometrischen Figuration verursachten abgestrahlten Schallsignals möglich ist, wird, insbesondere bei komplizierten Hohlräumen, vorzugsweise ein Vergleich des aufgenommenen Schallsignals mit einem Referenz-Schallsignal durchgeführt. Dieses Referenz-Schallsignal wird dadurch erhalten, dass ein geometrisch den gewünschen Abmessungen entsprechender Hohlkörper dem erfindungsgemäßen Prüfverfahren unterzogen wird und die hierbei ermittelten Schallsignale bzw. deren Analyse zum späteren Vergleich aufgezeichnet wird. Aussagen über die zulässige Streuung erhält man durch die Untersuchung mehrerer Teile mit korrekt ausgeführten Hohlräumen (Gut-Teilen).

Grundsätzlich ist eine Vielzahl von Schallquellen denkbar. Bei einer bevorzugten Ausführungsform der Erfindung wird das Ausgangs-Schallsignal durch einen Lautsprecher und einen Frequenzgenerator erzeugt. Hierbei kann es sich um Schallsignale mit diskreter Frequenz oder um Frequenzgemische, beispielsweise weisses oder rosa Rauschen handeln. Die Erzeugung des Schallsignals ist jedoch auch mit anderen Schallschwingungserzeugern möglich, beispielsweise mit abstimmbaren Pfeifen.

An einer oder mehreren von der Schallanlege-Position verschiedenen Stellen wird mittels eines Schallaufnehmers, beispielsweise eines Messmikrofons, das von dem Hohlkörper abgestrahlte Schallsignal aufgenommen und anschließend analysiert.

Häufig haben die zu untersuchenden Hohlräume mehrere Durchtritte nach aussen. Hierbei ist es möglich, den Ort der Schalleinspeisung, d.h. die Schallanlegeposition und/oder den Ort der Schallmessung, d.h. die Schallabstrahl-Position zu variieren, um eine breite Vergleichsbasis und somit eindeutige Ergebnisse zu erhalten. Zudem kann es, insbesondere bei komplizierten Hohlräumen, sinnvoll sein, mehrere Schallmessungen an verschiedenen Orten gleichzeitig durchzuführen, um die Prüfdauer zu reduzieren.

Das Ausgangs-Schallsignal kann ein Frequenzgemisch mit konstanter, im interessierenden Intervall vorzugsweise deutlich von Null verschiedener Amplitude über einen bestimmten Frequenzbereich sein, wobei in diesem Fall vorzugsweise ein FFT-Analysator zur Analyse des aufgenommenen Schallsignals verwendet wird. Zur Bestimmung der Übertragungsfunktionen sind auch die Ausgangs-Schallsignale einer FFT zu unterziehen. Die Abkürzung FFT steht für Fast Fourier Transformation.

Als Anregung ist insbesondere jedes Signal verwendbar, das die interessierenden Frequenzen mit ausreichender Amplitude enthält (zum Beispiel auch Puls- oder Sprungsignale etc.), d.h. vorzugsweise breitbandige Signale. Verwendet werden können ein Frequenzgemisch (Rauschen) oder eine zeitlich veränderliche Einzelfrequenz, die während der Messzeit, gegebenenfalls linear, von einem Minimalwert zu einem Maximalwert verändert wird (Sweep). Die Analyse der aufgenommenen Signale erfolgt mit einem FFT-Analysator. Wenn sowohl das Anregungssignal als auch das Antwortsignal in die Analyse eingehen, wobei ein entsprechendes Übertragungsverhalten ermittelt wird (Übertragungsfunktion), muss das Anregungssignal nicht unbedingt exakt reproduzierbar sein.

Weiterhin ist die Untersuchung auch bei Anregung mit einer einzelnen Frequenz möglich, wobei in diesem Fall ein FFT-Analysator nicht erforderlich ist.

Es versteht sich, dass das erfindungsgemäße Verfahren sowie die erfindungsgemäße Vorrichtung zur Prüfung unterschiedlichster Hohlkörper verwendet werden können und die Prüfung eines wassergekühlten Zylinderkopfs einer Brennkraftmaschine lediglich ein bevorzugtes und typischen Anwendungsgebiet darstellt.

Die Erfindung wird im folgenden anhand bevorzugter Ausführungsbeispiele unter Bezug auf die Zeichnung näher erläutert, in der
Fig. 1 eine schematische Schnittdarstellung eines Hohlkörpers 1 mit einer Schallanlege-Position und vier Schallabstrahl-Positionen zeigt,
Fig. 2 eine schematische Darstellung eines ersten Ausführungsbeispiels einer erfindungsgemäßen Vorrichtung ist,
Fig. 3 eine schematische Darstellung einer zweiten Ausführungsform einer erfindungsgemäßen Vorrichtung ist.
Fig. 4 eine detailliertere Darstellung des ersten Ausführungsbeispiels einer erfindungsgemäßen Vorrichtung ist, und
Fig. 5 eine detailliertere Darstellung der zweiten Ausführungsform einer erfindungsgemäßen Vorrichtung ist.

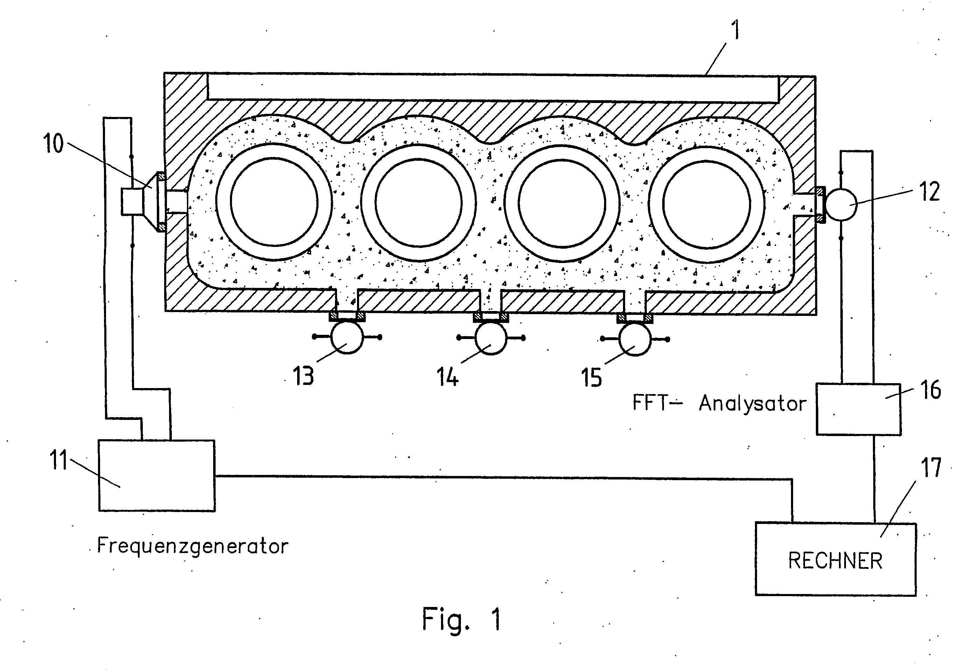

Fig. 1 zeigt in einer schematischen Schnittdarstellung einen Hohlkörper 1, bei dem es sich um den Zylinderkopf einer vierzylindrigen wassergekühlten Brennkraftmaschine handelt. An einer Stirnseite des Hohlkörpers 1 ist an einer exakt definierten Stelle in Bezug auf den Hohlkörper 1, nämlich an der Schallanlege-Position, ein Lautsprecher 10 angeordnet, der als Schallquelle dient und im Zusammenwirken mit einem Frequenzgenerator 11 ein Ausgangs-Schallsignal erzeugt. Der Lautsprecher ist unter Verwendung von Schallisolationsmaterial so an der Schallanlege-Position angeordnet, dass jedenfalls der überwiegende Teil der Schallenergie in den Hohlkörper eingeleitet und gleichzeitig der Prüfling vor Fremdschall geschützt wird.

Wie ebenfalls in Fig. 1 dargestellt, ist an der der Schallanlege-Position gegenüberliegenden Seite des Hohlkörpers 1 ein Mikrofon 12 an einer ebenfalls fest vorgegebenen Stelle in Bezug auf den Hohlkörper 1 angeordnet, nämlich der Schallabstrahl-Position. Weitere Mikrofone 13, 14 und 15 können an weiteren Schallabstrahl-Positionen angeordnet sein. Die Schallanlege-Position und die Schallabstrahl-Positionen sind vorzugsweise in der Nähe von Durchtritten der Hohlräume des Hohlkörpers 1 angeordnet. Die Mikrofone 12, 13, 14 und 15 sind unter Verwendung von Schallisolationsmaterial so an den Schallabstrahl-Positionen angeordnet, dass jedenfalls der überwiegende Teil der Schallenergie, die im Bereich der jeweiligen Schallabstrahl-Position von bzw. aus dem Hohlkörper abgestrahlt wird, von ihnen aufgenommen wird.

Es versteht sich, dass entweder gleichzeitig die Signale aller vier Mikrofone 12, 13, 14 und 15 aufgenommen werden können oder aufeinanderfolgend lediglich ein Mikrofon an den entsprechenden unterschiedlichen Stellen angeordnet werden und die jeweiligen Messungen zeitlich aufeinanderfolgend durchgeführt werden können. Es empfiehlt sich dabei, Durchtritte des Hohlraumes, die nicht für die Messung benutzt werden, mit Schallisolationsmaterial zu verschließen.

Die Mikrofone wandeln die aufgenommenen Schallsignale in elektrische Signale um und leiten diese, je nach Art der Signale über einen FFT-Analysator 16, einer elektronischen Datenverarbeitungsanlage (Rechner) 17 zu. Der Rechner bzw. die elektronische Datenverarbeitungsanlage 17 stellt, gegebenenfalls gemeinsam mit dem FFT-Analysator 16 eine Analyseeinrichtung dar, in der ein Vergleich der aktuell gemessenen Signale mit gespeicherten gleichartigen Signalen von Gut-Teilen erfolgt. Dieser Vergleich kann anhand von Amplituden- und Phasenfrequenzgängen oder daraus abgeleiteten physikalischen Größen wie den Übertragungsfunktionen usw. erfolgen.

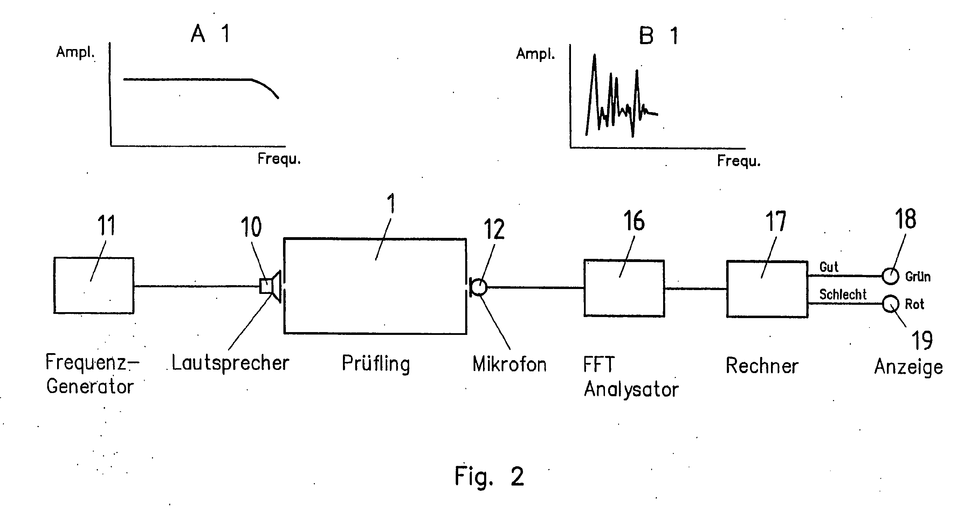

Eine erste Ausführungsform des erfindungsgemäßen Verfahrens bzw. der erfindungsgemäßen Vorrichtung ist schematisch in Fig. 2 dargestellt. Der Frequenzgenerator 11 erzeugt ein Rauschen bzw. einen Sweep. Mittels des Lautsprechers 10 wird dieses Signal in eine Öffnung eines Hohlraums des Hohlkörpers 1 (Prüfling) eingestrahlt. An einer anderen Öffnung des Hohlraums wird das dort abgestrahlte akustische Signal mit dem als Schallaufnehmer fungierenden Mikrofon 12 aufgefangen und in ein elektrisches Signal umgewandelt. Der FFT-Analysator 16 zerlegt das elektrische Signal in sein Frequenzspektrum und stellt die akustische Filtercharakteristik des Hohlraums in digitaler Form bereit.

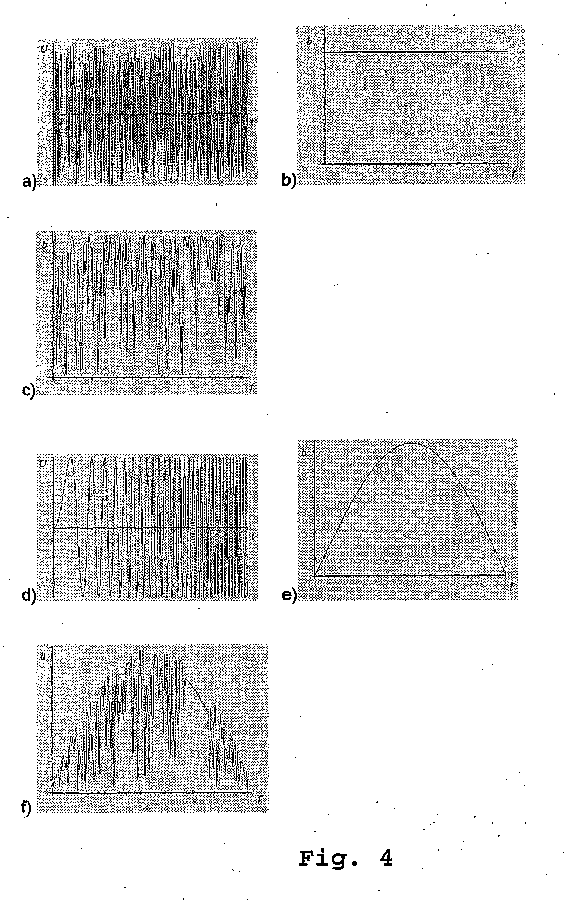

Eine detailliertere Darstellung ist beispielhaft in Fig. 4 gegeben. Wie in Fig. 4 dargestellt, erzeugt der Frequenzgenerator 11 ein breitbandiges Signal. In den Diagrammen a und d in Fig. 4 sind beispielhaft die Zeitverläufe (signalproportionale Spannung U über der Zeit t) eines Rauschens und eines Sweep und in den Diagrammen b und e in Fig. 4 die jeweils dazugehörigen Spektren (Amplitude Û über Frequenz f) dargestellt. In den Diagrammen c und f in Fig. 4 sind schematisch Spektren (Amplitude Û über Frequenz f) von Antwortsignalen angegeben, die bei Anregung mit einem Rauschen beziehungsweise mit einem Sweep auftreten können und gegenüber den Spektren der Erregersignale (vergleiche Diagramme b und e in Fig. 4) charakteristische Veränderungen aufweisen.

Der zu untersuchende Frequenzbereich wird in eine vorzugebende Anzahl von Unterbereichen ("Linien") eingeteilt. Diese Unterteilung ergibt sich bei der Digitalisierung (Sampling) der Messdaten in Abhängigkeit von der Messdauer und der Samplingfrequenz. Diese Informationen liegen in digitaler Form vor und können punktweise mit einer Referenzkurve verglichen werden, die unter gleichen Bedingungen durch Analyse der Messdaten eines Gut-Teiles bestimmt wurde. Eine Darstellung des abgestrahlten bzw. aufgenommenen Schallsignals B1 ist ebenfalls in Fig. 2 dargestellt. Beim Vergleich des Signals B1 mit einer entsprechenden Referenzkurve können typische Veränderungen festgestellt werden, die im Einzelfall bestimmten Fehlern, d.h. Fehlbildungen des Hohlraums, zugeordnet werden können. Beispielsweise kann eine fehlende Resonanzspitze darauf hindeuten, dass ein Hohlraumteil verschlossen ist. Gleichzeitig können hierbei zusätzliche Resonanzspitzen auftauchen.

Bei der praktischen Anwendung der Erfindung müssen für ein spezielles Teil typische Resonanzspitzen ermittelt werden, aus denen sich eine Referenzkurve ergibt. Der Vergleich der Messkurve mit der Referenzkurve ergibt dann, wenn die Übereinstimmung der Kurven sehr gut bis ausreichend ist, das heißt, wenn die Differenz der beiden Kurven eine in entsprechenden Voruntersuchungen zu ermittelnde Toleranzgrenze nicht überschreitet, dass der Hohlraum ordnungsgemäß ausgebildet ist, sodass das Teil als ordnungsgemäß eingestuft werden kann. Dieses Ergebnis kann beispielsweise durch das Aufleuchten einer grünen Signaldiode 18 angezeigt werden. Ist dagegen die Übereinstimmung schlecht und werden signifikante Abweichungen festgestellt, weist der Hohlraum nicht die gewünschte Geometrie auf. Ist ein ermitteltes Frequenzbild bekannt, d.h. ist die Referenzkurve für einen bestimmten Fehler bekannt, so kann dieser Fehler direkt angegeben werden. Je nach Art des Fehlers ist eine Nachbearbeitung des zu überprüfenden Bauteils möglich.

Wenn das Frequenzbild nicht bekannt ist, wird lediglich eine Mitteilung ausgegeben, dass das Teil nicht in Ordnung ist. Dies kann beispielsweise durch Aufleuchten einer roten Signaldiode 19 erfolgen.

Es versteht sich, dass die Aussagekraft des Messergebnisses insbesondere davon abhängt, wie genau die Referenzkurve untersucht wird. Bei der Auswertung können sowohl Amplituden-Informationen als auch Phasen-Informationen ausgewertet werden.

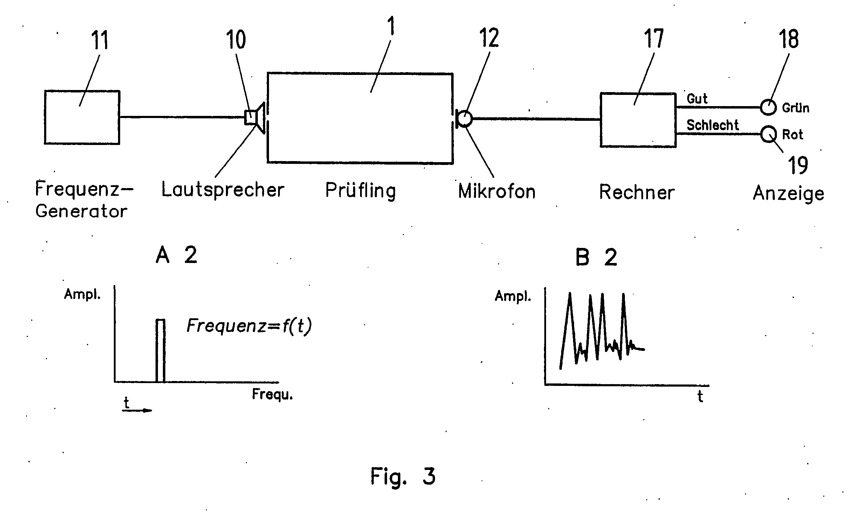

Fig. 3 zeigt schematisch ein weiteres Ausführungsbeispiel eines erfindungsgemäßen Verfahrens bzw. einer erfindungsgemäßen Vorrichtung. Das zweite Ausführungsbeispiel unterscheidet sich von dem ersten Ausführungsbeispiel dadurch, dass nicht eine Rauschanalyse, sondern eine Suchtonanalyse durchgeführt wird, das heißt, als Anregung wird statt eines breitbandigen Signals ein Signal verwendet, das nur eine einzige Frequenz enthält. Die Suchtonanalyse kann daher auch als Einzelfrequenzanalyse bezeichnet werden. Der Aufbau der Vorrichtung gemäß Fig. 3 entspricht derjenigen gemäß Fig. 2 mit der Einschränkung, dass bei dem Aufbau gemäß Fig. 3 ein FFT-Analysator nicht erforderlich ist.

Bei der Einzelfrequenzanalyse besteht das akustische Signal aus einer Einzelfrequenz. Je nach Frequenz wird das Ausgangs-Schallsignal unterschiedlich stark gedämpft, das heißt hinsichtlich seiner Amplitude und Phasenlage beeinflusst. Bei der Analyse wird somit ermittelt, wie stark ein Signal einer bestimmten Frequenz durch die akustischen Filtereigenschaften des Hohlraums des Hohlkörpers gedämpft wird, was nach der Analyse anhand von Amplitude und Phasenlage qualitativ erfassbar ist. Es ergibt sich im Ergebnis die gleiche Filtercharakteristik wie bei der Rauschanalyse. Die Beurteilung erfolgt nach gleichen Kriterien.

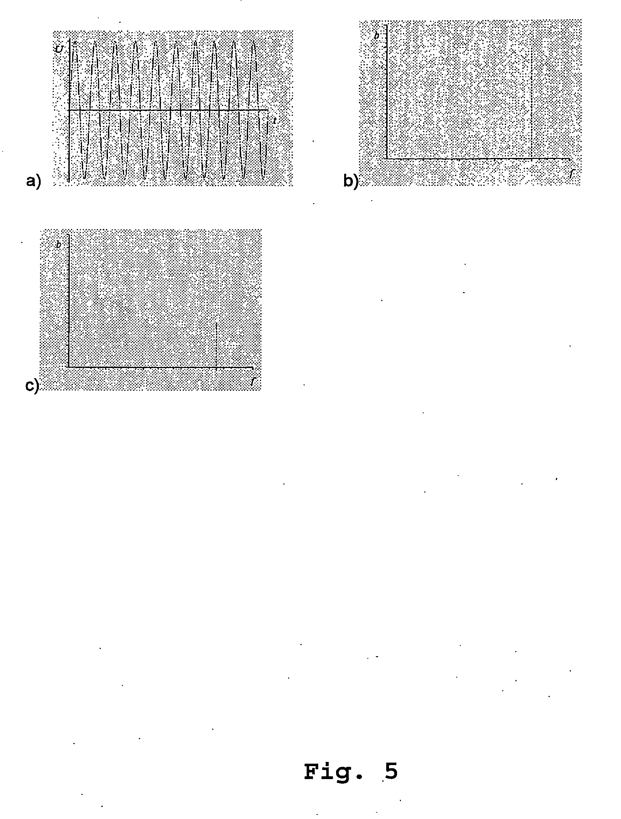

In Fig. 5 ist eine genauere Darstellung dieser Ausführungsform gegeben. Die Diagramme a und b in Fig. 5 zeigen den Zeitverlauf (signalproprtionale Spannung U über Zeit t) eines solchen Erregersignals und das dazugehörige Spektrum (Amplitude Ü über Frequenz f).

Diagramm c in Fig. 5 zeigt beispielhaft ein Spektrum (Amplitude Û über Frequenz f) eines durch die akustischen Filtereigenschaften des Hohlraums des Hohlkörpers veränderten Antwortsignals. Wie zuvor erwähnt, ergibt sich im Ergebnis die gleiche Filtercharakteristik wie bei der Verwendung eines breitbandigen Signals und die Beurteilung erfolgt nach gleichen Kriterien.

## Patentansprüche

1. Verfahren zur Prüfung eines Hohlkörpers (1) hinsichtlich geometrisch richtiger Ausführung von Hohlräumen mit den folgenden Schritten:
A Positionieren einer Schallquelle (10) an einer vorbestimmten Schallanlege-Position in Bezug auf den Hohlkörper;
B Erzeugen eines Ausgangs-Schallsignals (A1;A2) mittels der Schallquelle (10);
C Aufnehmen des von dem Hohlkörper abgestrahlten Schallsignals (B1;B2) an mindestens einer vorbestimmten Schallabstrahl-Position (12, 13, 14, 15) in Bezug auf den Hohlkörper;
C1 wobei Schritt C zusätzlich das Aufnehmen des Ausgangs-Schallsignals (A1;A2) beinhaltet;
D Analyse des aufgenommenen Schallsignals (B1;B2);
D1 wobei Schritt D die Analyse der aufgenommenen Schallsignale (A1; A2; B1;B2) zur Ermittlung einer Übertragungsfunktion beinhaltet.

2. Verfahren nach Anspruch 1, **dadurch gekennzeichnet, dass** Schritt D einen Vergleich des aufgenommenen Schallsignals (B1;B2) mit einem Referenz-Schallsignal enthält.

3. Verfahren nach Anspruch 1, **dadurch gekennzeichnet, dass** Schritt D einen Vergleich von aus dem aufgenommenen Schallsignal (B1;B2) und aus einem Referenz-Schallsignal gewonnenen Analysedaten enthält.

4. Verfahren nach Anspruch 1, 2 oder 3, **dadurch gekennzeichnet, dass** das Ausgangs-Schallsignal (A1;A2) mittels eines Lautsprechers (10) und eines Frequenzgenerators (11) erzeugt wird.

5. Verfahren nach Anspruch 4, **dadurch gekennzeichnet, dass** als Ausgangs-Schallsignal (A1) ein Frequenzgemisch, insbesondere ein Rauschen oder Sweep erzeugt wird.

6. Verfahren nach Anspruch 5, **dadurch gekennzeichnet, dass** Schritt D mittels eines FFT-Analysators (16) durchgeführt wird.

7. Verfahren nach Anspruch 4, **dadurch gekennzeichnet, dass** als Ausgangs-Schallsignal (A2) eine Einzelfrequenz bestimmter Amplitude erzeugt wird.

8. Verfahren nach einem der vorstehenden Ansprüche, **dadurch gekennzeichnet, dass** das von dem Hohlkörper (1) abgestrahlte Schallsignal (B1;B2) an mehreren vorbestimmten Schallabstrahl-Positionen (12, 13, 14, 15) in Bezug auf den Hohlkörper (1) aufgenommen wird.

9. Verfahren nach Anspruch 1, **dadurch gekennzeichnet, dass** Schritt D einen Vergleich der aufgenommenen Übertragungsfunktion mit einer Referenz-Übertragungsfunktion enthält.

10. Verfahren nach einem der vorstehenden Ansprüche, **dadurch gekennzeichnet, dass** die vorbestimmte Schallanlege-Position sich an einer Stelle befindet, an der ein Zugang zu dem Hohlraum des Hohlkörpers (1) besteht.

11. Verfahren nach einem der vorstehenden Ansprüche, **dadurch gekennzeichnet, dass** die vorbestimmte Schallabstrahl-Position (12, 13, 14, 15) sich an einer Stelle befindet, an der ein Zugang zu dem Hohlraum des Hohlkörpers (1) besteht.

12. Vorrichtung zur Prüfung eines Hohlkörpers (1) hinsichtlich geometrisch richtiger Ausführung von Hohlräumen mit
- einer Schallquelle (10, 11), die an einer vorbestimmten Schallanlege-Position in Bezug auf den Hohlkörper positionierbar und dazu ausgelegt ist, ein Ausgangs-Schallsignal (A1;A2) zu erzeugen;
- mindestens einem Schallaufnehmer (12, 13, 14, 15) zum Aufnehmen des von dem Hohlkörper abgestrahlten Schallsignals (B1;B2) an mindestens einer vorbestimmten Schallabstrahl-Position (12, 13, 14, 15) in Bezug auf den Hohlkörper;
- einer Analyseeinrichtung (16, 17) zur Analyse des aufgenommenen Schallsignals (B1;B2), wobei die Analyseeinrichtung (16,17) dazu ausgelegt ist, einen Vergleich des aufgenommenen Schallsignals (B1;B2) und/oder davon abgeleiteter Größen wie Amplitudenfrequenzgang, Phasenfrequenzgang und Übertragungsfunktion mit einem Referenzsignal durchzuführen.

13. Vorrichtung nach Anspruch 12, **dadurch gekennzeichnet, dass** die Schallquelle einen Lautsprecher (10) und einen Frequenzgenerator (11) aufweist.

14. Vorrichtung nach Anspruch 12 oder 13, **dadurch gekennzeichnet, dass** das Ausgangs-Schallsignal (A1) ein Frequenzgemisch, insbesondere ein Rauschen oder Sweep ist.

15. Vorrichtung nach Anspruch 14, **dadurch gekennzeichnet, dass** die Analyseeinrichtung einen FFT-Analysator (16) aufweist.

16. Vorrichtung nach Anspruch 12 oder 13, **dadurch gekennzeichnet, dass** das Ausgangs-Schallsignal (A2) eine Einzelfrequenz bestimmter Amplitude ist.

17. Vorrichtung nach einem der Ansprüche 12 bis 16, **dadurch gekennzeichnet, dass** mehrere Schallaufnehmer (12, 13, 14, 15) zum gleichzeitigen Aufnehmen des von dem Hohlkörper (1) abgestrahlten Schallsignals (B1;B2) an mehreren vorbestimmten Schallabstrahl-Positionen in Bezug auf den Hohlkörper (1) vorgesehen sind.

## Claims

1. Method for testing a hollow body (1) with respect to geometrically correct realization of cavities, comprising the following steps:
A positioning of a sound source (10) at a predetermined sound feeding position with respect to said hollow body;
B generating an output sound signal (A1; A2) by means of said sound source (10);
C recording a sound signal (B1; B2) emitted by said hollow body at at least one predetermined sound emission position (12, 13, 14, 15) with respect to said hollow body;
C1 wherein step C includes additionally recording of said output sound signal (A1; A2);
D analysis of said recorded sound signal (B1; B2);
D1 wherein step D includes the analysis of said recorded sound signals (A1; A2; B1; B2) for determining a transmission function.

2. Method according to claim 1, **characterized in that** step D includes a comparison of said recorded sound signal (B1; B2) with a reference sound signal.

3. Method according to claim 1, **characterized in that** step D includes a comparison of analysis data obtained from said recorded sound signal (B1; B2) and a reference sound signal.

4. Method according to claim 1, 2 or 3, **characterized in that** said output sound signal (A1; A2) is generated by means of a loudspeaker (10) and a frequency generator (11).

5. Method according to claim 4, **characterized in that** a frequency mixture, specifically noise or sweep, is generated as an output sound signal (A1).

6. Method according to claim 5, **characterized in that** step D is executed by means of an FFT analyzer (16).

7. Method according to claim 4, **characterized in that** a single frequency of a specific amplitude is generated as an output sound signal (A2).

8. Method according to any of the preceding claims, **characterized in that** the sound signal (B1; B2) emitted from said hollow body (1) is recorded at a plurality of predetermined sound emission positions (12, 13, 14, 15) with respect to said hollow body (1).

9. Method according to claim 1, **characterized in that** step D includes a comparison of the recorded transmission function with a reference transmission function.

10. Method according to any of the preceding claims, **characterized in that** the predetermined sound feeding position is located at a position at which there is an access to the cavity of said hollow body (1).

11. Method according to any of the preceding claims, **characterized in that** said predetermined sound emission position (12, 13, 14, 15) is located at a position at which there is an access to said cavity of said hollow body (1).

12. Apparatus for testing a hollow body (1) with respect to geometrically correct realization of cavities having
- a sound source (10, 11) which can be positioned at a predetermined sound feeding position with respect to said hollow body and which is adapted to generate an output sound signal (A1; A2);
- at least one sound recorder (12, 13, 14, 15) for recording the sound signal (B1; B2) emitted from said hollow body at at least one predetermined sound emission position (12, 13, 14, 15) with respect to said hollow body;
- an analyzing means (16, 17) for analyzing said recorded sound signal (B1; B2), wherein said analyzing means (16, 17) is adapted to execute the comparison of the recorded sound signal (B1; B2) and/or quantities derived therefrom like amplitude frequency range, face frequency range and transmission function with a reference signal.

13. Apparatus according to claim 12, **characterized in that** said sound source comprises a loudspeaker (10) and a frequency generator (11).

14. Apparatus according to claim 12 or 13, **characterized in that** said output sound signal (A1) is a frequency mixture, specifically a noise or sweep.

15. Apparatus according to claim 14, **characterized in that** said analyzing means comprises an FFT analyzer (16).

16. Apparatus according to claim 12 or 13, **characterized in that** said output sound signal (A2) is a single frequency of a specific amplitude.

17. Apparatus according to any of claims 12 to 16, **characterized in that** a plurality of sound recorders (12, 13, 14, 15) are provided at a plurality of predetermined sound emission positions with respect to said hollow body (1) in order to simultaneously record said sound signal (B1; B2) emitted from said hollow body (1).

## Revendications

1. Procédé pour tester un corps creux (1) pour vérifier que la géométrie des espaces creux est correctement réalisée, comportant les étapes suivantes:
A placer une source sonore (10) à un endroit prédéfini d'application sonore par rapport au corps creux;
B produire un signal sonore de sortie (A1; A2) à l'aide de la source sonore (10);
C enregistrer le signal sonore (B1; B2) émis par le corps creux à au moins un endroit prédéfini d'émission sonore (12, 13, 14, 15) par rapport au corps creux;
C1 dans laquelle l'étape C comprenant en outre l'enregistrement du signal sonore de sortie (A1; A2);
D analyser le signal sonore (B1; B2) capté;
D1 dans laquelle l'étape D comprenant l'analyse des signaux sonores captés (A1; A2; B1; B2) pour déterminer une fonction de transmission.

2. Procédé selon la revendication 1, **caractérisé en ce que** l'étape D comprend une comparaison du signal sonore capté (B1; B2) à un signal sonore de référence.

3. Procédé selon la revendication 1, **caractérisé en ce que** l'étape D comprend une comparaison des données d'analyse obtenues à partir du signal sonore capté (B1; B2) et à partir d'un signal sonore de référence.

4. Procédé selon la revendication 1, 2 ou 3, **caractérisé en ce que** le signal sonore de sortie (A1; A2) est produit à l'aide d'un haut-parleur (10) et d'un générateur de fréquence (11).

5. Procédé selon la revendication 4, **caractérisé en ce que** le signal sonore de sortie (A1) produit est un spectre de fréquences, en particulier un bruit ou un balayage.

6. Procédé selon la revendication 5, **caractérisé en ce que** l'étape D est réalisée à l'aide d'un analyseur FFT (16).

7. Procédé selon la revendication 4, **caractérisé en ce que** le signal sonore de sortie (A2) produit une fréquence unique d'une certaine amplitude.

8. Procédé selon l'une des revendications précédentes, **caractérisé en ce que** le signal sonore (B1; B2) émis par le corps creux (1) est capté à plusieurs endroits prédéfinis d'émission sonore (12, 13, 14, 15) par rapport au corps creux (1).

9. Procédé selon la revendication 1, **caractérisé en ce que** l'étape D comprend l'opération de comparer la fonction de transmission reçue à une fonction de transmission de référence.

10. Procédé selon l'une des revendications précédentes, **caractérisé en ce que** l'endroit prédéfini d'application sonore se trouve à un endroit où existe un accès à l'espace creux du corps creux (1).

11. Procédé selon l'une des revendications précédentes, **caractérisé en ce que** l'endroit prédéfini d'émission sonore (12, 13, 14, 15) se trouve à un endroit où existe un accès à l'espace creux du corps creux (1).

12. Dispositif pour tester un corps creux (1) pour vérifier que la géométrie des espaces creux est correctement réalisée, comportant
- une source sonore (10, 11) qui peut être placée à un endroit prédéfini d'application sonore par rapport au corps creux et qui est conçue de manière à produire un signal sonore de sortie (A1; A2);
- au moins un capteur sonore (12, 13, 14, 15) pour enregistrer le signal sonore (B1; B2) émis par le corps creux à au moins un endroit prédéfini d'émission sonore (12, 13, 14, 15) par rapport au corps creux;
- une installation d'analyse (16, 17) pour analyser le signal sonore capté (B1; B2), l'installation d'analyse (16, 17) étant conçue de manière à comparer le signal sonore capté (B1; B2) et/ou des grandeurs qui en sont dérivées comme la réponse fréquentielle en amplitude, la réponse fréquentielle en phase et la fonction de transmission avec un signal de référence.

13. Dispositif selon la revendication 12, **caractérisé en ce que** la source sonore comporte un haut-parleur (10) et un générateur de fréquence (11).

14. Dispositif selon la revendication 12 ou 13, **caractérisé en ce que** le signal sonore de sortie (A1) est un spectre de fréquences, en particulier un bruit ou un balayage.

15. Dispositif selon la revendication 14, **caractérisé en ce que** l'installation d'analyse comporte un analyseur FFT (16).

16. Dispositif selon la revendication 12 ou 13, **caractérisé en ce que** le signal sonore de sortie (A2) est une fréquence unique d'une certaine amplitude.

17. Dispositif selon l'une des revendications 12 à 16, **caractérisé en ce que** plusieurs capteurs sonores (12, 13, 14, 15) sont prévus pour capter en même temps le signal sonore (B1; B2) émis par le corps creux (1) à plusieurs endroits prédéfinis d'émission sonore par rapport au corps creux (1).
